# EUROPEAN PATENT APPLICATION

(11) **EP 4 478 177 A1**
(43) Date of publication of application: **18.12.2024**
(21) Application number: 22924894.3
(22) Date of filing: 07.02.2022
(51) Int. Cl.: G06F 8/20, G06F 8/30

(54) **COMPUTATION DEVICE AND SOFTWARE COMPONENT SELECTION METHOD**

(71) Applicant: Hitachi Astemo, Ltd., Ibaraki 312-8503 (JP)
(72) Inventor: SUZUKI, Takafumi, Hitachinaka-shi, Ibaraki 312-8503 (JP)
(74) Representative: Strehl Schübel-Hopf & Partner
(86) International application number: PCT/JP2022/004767
(87) International publication number: WO 2023/148987

(57) **Abstract**

A processing device includes a storage unit that stores a software component database that is a database indicating a correspondence relationship between a software component including at least a source code and a software feature indicating characteristics of a software, and heterogeneous features correlation information indicating a correspondence relationship between the software feature and a system feature having a lower abstraction level than the software feature and indicating characteristics of a system, an input unit that receives a request feature list including one or more of the system features, a feature conversion unit that refers to the heterogeneous features correlation information and outputs the software feature corresponding to the system feature included in the request feature list, and a software component selecting unit that refers to the software component database and outputs as a software component selection result the software component corresponding to the software feature output by the feature conversion unit.

## Description

### Technical Field

The present invention relates to a processing device and a method for selecting a software component.

### Background Art

There is known a software product line (SPL) development in which software assets are reused to improve the efficiency of software development. PTL 1 discloses a product line type development support device constituted by a product information database in which product information of a plurality of existing products is accumulated, a feature information database in which feature information used in the existing products is accumulated, a product-feature related information database in which product-feature related information in which the feature information is linked to each product is accumulated, and an information management unit that classifies and manages the product information, the feature information, and the product-feature related information, the product line type development support device including an inter-feature linking means for performing linking between features by analyzing the dependency between the features using the product-feature related information as an input, an inter-feature related information database in which inter-feature related information obtained by linkage created by the inter-feature linking means is accumulated, and a related information management unit that registers and manages the inter-feature related information.

### Citation List

### Patent Literature

PTL 1: WO 2011/099053 A

### Summary of Invention

### Technical Problem

By the invention described in PTL 1, software components cannot be obtained.

### Solution to Problem

A processing device according to a first aspect of the present invention includes a storage unit that stores a software component database that is a database indicating a correspondence relationship between a software component including at least a source code and a software feature indicating characteristics of a software, and heterogeneous features correlation information indicating a correspondence relationship between the software feature and a system feature having a lower abstraction level than the software feature and indicating characteristics of a system, an input unit that receives a request feature list including one or more of the system features, a feature conversion unit that refers to the heterogeneous features correlation information and outputs the software feature corresponding to the system feature included in the request feature list, and a software component selecting unit that refers to the software component database and outputs as a software component selection result the software component corresponding to the software feature output by the feature conversion unit. A method for selecting a software component according to a second aspect of the present invention is a method executed by a processing device including a storage unit that stores a software component database that is a database indicating a correspondence relationship between a software component including at least a source code and a software feature indicating characteristics of a software, and heterogeneous features correlation information indicating a correspondence relationship between the software feature and a system feature having a lower abstraction level than the software feature and indicating characteristics of a system, and an input unit that receives a request feature list including one or more of the system features, the method including feature conversion processing of referring to the heterogeneous features correlation information and outputting the software feature corresponding to the system feature included in the request feature list, and software component selecting processing of referring to the software component database and outputting as a software component selection result the software component corresponding to the software feature output by the feature conversion processing.

### Advantageous Effects of Invention

According to the present invention, a specific software component can be obtained based on a system feature having high abstraction level.

### Brief Description of Drawings

[FIG. 1] FIG. 1 is a functional configuration diagram of a processing device according to a first embodiment.
[FIG. 2] FIG. 2 illustrates an example of system feature constraining information.
[FIG. 3] FIG. 3 illustrates an example of heterogeneous features correlation information.
[FIG. 4] FIG. 4 is a hardware configuration diagram of the processing device 1.
[FIG. 5] FIG. 5 is a flowchart illustrating processing executed by the processing device 1.
[FIG. 6] FIG. 6 is a functional configuration diagram of a processing device according to a second embodiment.
[FIG. 7] FIG. 7 illustrates another example of validity detection processing.
[FIG. 8] FIG. 8 is a functional configuration diagram of a processing device according to a third embodiment.
[FIG. 9] FIG. 9 is a functional configuration diagram of a processing device according to a fourth embodiment.

### Description of Embodiments

A system component is a result of designing, such as a set of a model designed during system development, a design document, a test case, and an expected value. Each system component is provided with a system feature that indicates system characteristics. The correspondence relationship between system components and system features may be any of 1 to 1, 1 to many, and many to 1. The correspondence relationships between system components and system features are known.

A software component is a result of designing, such as a set of a source code model designed during software development, a design document, a test case, and an expected value. Each software component may further include a test result. Each software component is provided with a software feature that indicates software characteristics. The correspondence relationship between software components and software features may be any of 1 to 1, 1 to many, and many to 1. The correspondence relationships between software components and software features are known. The system features have higher abstraction levels than the software features.

### -First embodiment-

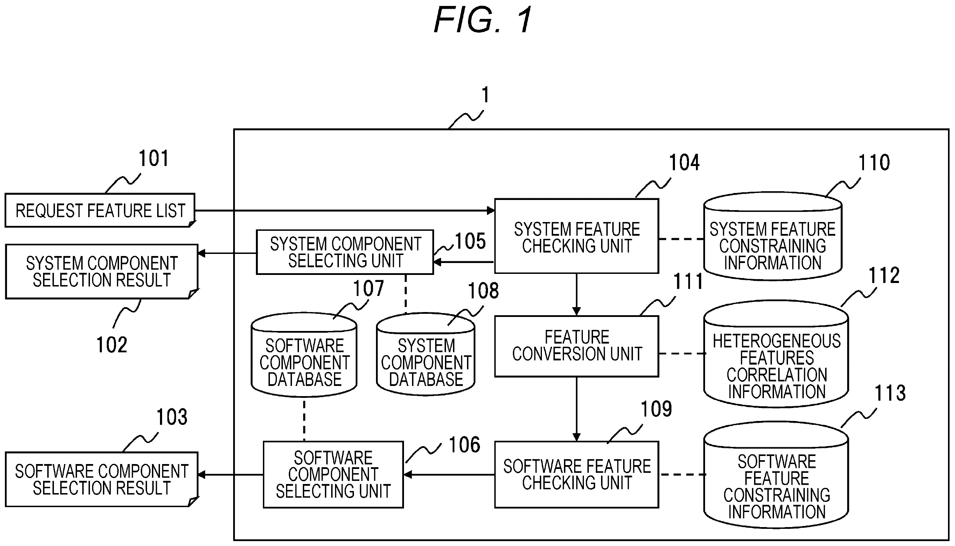

A first embodiment of a processing device according to the present invention will be described with reference to FIGS. 1 to 5.

FIG. 1 is a functional configuration diagram of a processing device 1 according to the first embodiment. In FIG. 1, solid lines indicate information delivery, and broken lines indicate reference to information or a database. The processing device 1 processes a request feature list 101 that has been input and outputs a system component selection result 102 and a software component selection result 103. The request feature list 101 is a set of one or more system features, and is hereinafter also referred to as "system feature group". The request feature list 101 is previously created by a person who uses the processing device 1 (hereinafter referred to as "user").

The processing device 1 includes a system feature checking unit 104, a system component selecting unit 105, a software component selecting unit 106, a software component database (hereinafter referred to as "software component DB") 107, a system component database (hereinafter referred to as "system component DB") 108, a software feature checking unit 109, system feature constraining information 110, a feature conversion unit 111, heterogeneous features correlation information 112, and software feature constraining information 113.

The system feature checking unit 104, the system component selecting unit 105, the software component selecting unit 106, the software feature checking unit 109, and the feature conversion unit 111 are implemented by the processing described later. The software component DB 107, the system component DB 108, the system feature constraining information 110, the heterogeneous features correlation information 112, and the software feature constraining information 113 are previously created pieces of information and stored in a storage device described later.

The system feature constraining information 110 is information indicating constraints among system features. Specifically, the system feature constraining information 110 indicates necessary relationship, subordinate relationship, conflict relationship, and the like among system features. For example, by referring to the system feature constraining information 110 when a certain system feature is selected, a system feature that is in a subordinate relationship and is thus to be selected together and a system feature that is in a conflict relationship and thus cannot be selected together can be specified.

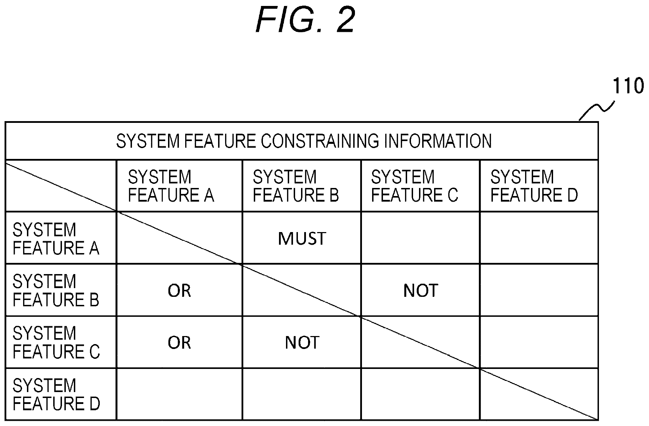

FIG. 2 illustrates an example of the system feature constraining information 110. In the system feature constraining information 110, there is no information on constraint between the same system features, so that there is no element in the main diagonal from the upper left to the lower right in the drawing. Regarding the column of "system feature A", the elements for "system feature B" and "system feature C" are "OR", and the element for "system feature D" is blank. This indicates that when "system feature A" is selected, only one of "system feature B" and "system feature C" is selected, and there is no constraint for "system feature D".

Regarding the column of "system feature B", the element for "system feature A" is "MUST", the element for "system feature C" is "NOT", and the element for "system feature D" is blank. This indicates that when "system feature B" is selected, "system feature A" is essential, that is, needs to be selected together, and there is no constraint for "system feature D" that can be selected together with "system feature C". Although FIG. 2 illustrates the system feature constraining information 110 in a table form for easy understanding, the system feature constraining information 110 is not limited to a table form and can be expressed in any style. Description will continue with reference to FIG. 1 again.

The software feature constraining information 113 is information indicating constraints among software features. Specifically, the software feature constraining information 113 indicates necessary relationship, subordinate relationship, conflict relationship, and the like among software features. For example, by referring to the system feature constraining information 110 when a certain software feature is selected, a software feature that is in a subordinate relationship and is thus to be selected together and a software feature that is in a conflict relationship and thus cannot be selected together can be specified. The software feature constraining information 113 may be expressed, for example, like the system feature constraining information 110 shown in FIG. 2.

The heterogeneous features correlation information 112 indicates correlations between system features and software features. Specifically, the heterogeneous features correlation information 112 indicates one or more software features correlated with each system feature. As described above, since the system features have higher abstraction level than the software features, a single system feature is very likely to have correlation with a plurality of software features . However, a single system feature may be correlated with only one software feature, or a plurality of system features may be correlated with the same software feature.

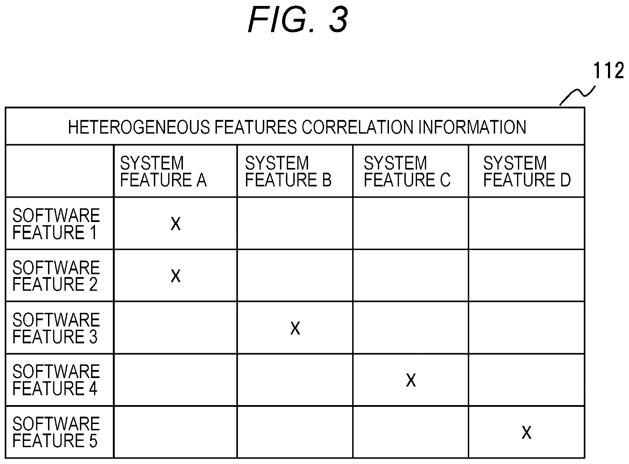

FIG. 3 illustrates an example of the heterogeneous features correlation information 112. FIG. 3 illustrates a correlation among four system features and five software features. The drawing shows that, for example, "system feature A" is correlated with "software feature 1" and "software feature 2." Also shown is that "system feature B" is correlated with "software feature 3". Description will continue with reference to FIG. 1 again.

The software component DB 107 is a database indicating software components corresponding to software features. The software component DB 107 stores a set of a specific model, a design document, a test case, an expected value, and a test result for each software feature. However, one or more of the five, that is, a model, a design document, a test case, an expected value, and a test result may be missing, or other information may be added.

The system component DB 108 is a database indicating a system component corresponding to a system feature. The system component DB 108 stores a set of a specific model, a design document, a test case, and an expected value for each system feature. However, one or more of the four, that is, a model, a design document, a test case, and an expected value may be missing, or other information may be added.

The system feature checking unit 104 refers to the system feature constraining information 110 to check the conformity of a plurality of system features that has been input. When it is determined that there is no problem in the conformity of a plurality of system features that has been input, the system feature checking unit 104 outputs all the system features that have been input. When it is determined that there is a problem in the conformity of a plurality of system features that has been input, the system feature checking unit 104 gives a notification that a problem has occurred. The conformity here means that there is no lacking combination and no combination of conflict relationship in the system feature group that has been input.

The feature conversion unit 111 calculates a software feature corresponding to the system feature that has been input. This is specifically as described below. The system feature group of which conformity has been checked by the system feature checking unit 104 is input to the feature conversion unit 111. The feature conversion unit 111 sequentially performs the following processing on each system feature, as a processing-target system feature, included in the system feature group. That is, the feature conversion unit 111 specifies one or more software features corresponding to the processing-target system feature with reference to the heterogeneous features correlation information 112. The feature conversion unit 111 outputs the specified one or more software features as a software feature group. That is, the feature conversion unit 111 converts the system feature group that has been input into the corresponding software feature group.

The software feature checking unit 109 refers to the software feature constraining information 113 to check the conformity of the software feature group that has been input. When it is determined that there is no problem in the conformity of a plurality of software features that has been input, the software feature checking unit 109 outputs all the software features that have been input. When it is determined that there is a problem in the conformity of a plurality of software features that has been input, the software feature checking unit 109 gives a notification that a problem has occurred. The conformity here means that there is no lacking combination and no combination of conflict relationship in the system feature group that has been input.

The software component selecting unit 106 outputs the software component group corresponding to the software feature group that has been input. Specifically, the software component selecting unit 106 sequentially performs the following processing on each software feature, as a processing-target software feature, included in the software feature group that has been input. That is, the software component selecting unit 106 specifies one or more software components corresponding to the processing-target software feature with reference to the software component DB 107. The software component selecting unit 106 outputs the specified one or more software components as the software component selection result 103. Note that the software component that the software component selecting unit 106 outputs corresponds to the system feature included in the request feature list 101.

The system component selecting unit 105 outputs a system component group corresponding to the system feature group that has been input. Specifically, the system component selecting unit 105 sequentially performs the following processing on each system feature, as a processing-target system feature, included in the system feature group checked by the system feature checking unit 104. That is, the system component selecting unit 105 specifies one or more system components corresponding to the processing-target system feature with reference to the system component DB 108. The system component selecting unit 105 outputs the specified one or more system components as the system component selection result 102. Note that the system component that the system component selecting unit 105 outputs corresponds to the system feature included in the request feature list 101.

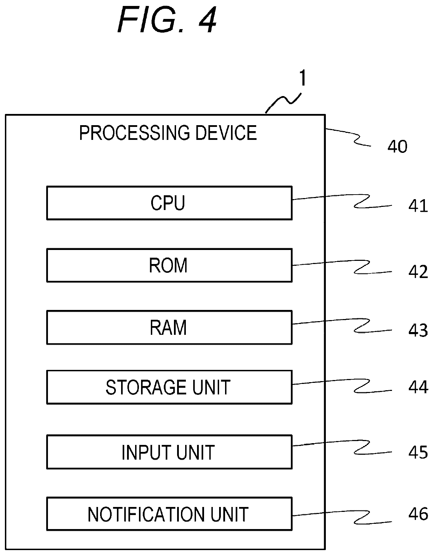

FIG. 4 is a hardware configuration diagram of the processing device 1. The processing device 40 includes a CPU 41 that is a central processing unit, a ROM 42 that is a read-only storage device, a RAM 43 that is a readable/writable storage device, a storage unit 44 that is a nonvolatile storage device, an input unit 45 that receives an input from the external, and a notification unit 46 used for notification.

The CPU 41 loads a program stored in the ROM 42 into the RAM 43 and executes the program, thereby implementing the above-described various functions, specifically, the system feature checking unit 104, the system component selecting unit 105, the software component selecting unit 106, the software feature checking unit 109, and the feature conversion unit 111. The above-described various functions of the processing device 40 may be implemented by, instead of the combination of the CPU 41, the ROM 42, and the RAM 43, a field programmable gate array (FPGA) which is a rewritable logic circuit or an application specific integrated circuit (ASIC) which is an application specific integrated circuit. Alternatively, the above-described various functions may be implemented by, instead of the combination of the CPU 41, the ROM 42, and the RAM 43, a combination of different configurations, for example, a combination of the CPU 41, the ROM 42, the RAM 43, and the FPGA.

The storage unit 44 is, for example, a hard disk drive. The storage unit 44 stores the software component DB 107, the system component DB 108, the system feature constraining information 110, the heterogeneous features correlation information 112, and the software feature constraining information 113. However, it is not essential that the processing device 1 includes the storage unit 44. For example, the software component DB 107, the system component DB 108, the system feature constraining information 110, the heterogeneous features correlation information 112, and the software feature constraining information 113 may be read from the external and stored in the RAM 43 each time the processing device 1 is booted.

The input unit 45 is an input device that receives an input from the external, for example, a mouse or a keyboard. The input unit 45 is used at least for the user inputting the request feature list 101. However, information may be input to the processing device 1 from the external by communication. In this case, the input unit 45 is a communication module that performs communication, for example, a network interface card compatible with IEEE 802.3. The notification unit 46 notifies the user by sound or video. The notification unit 46 is, for example, a speaker, a liquid crystal display, an audio signal output device, or a video signal output device. However, the notification unit 46 may output notification information to the external by communication. In this case, a device that has received information by communication from the processing device 1 outputs a sound or a video to notify the user. In this case, the input unit 45 is a communication module that performs communication, for example, a network interface card compatible with IEEE 802.3.

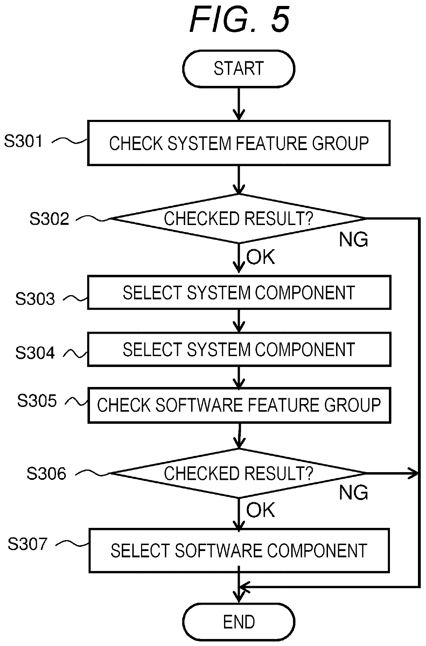

FIG. 5 is a flowchart illustrating the processing executed by the processing device 1. When the request feature list 101 is input from the external, the processing device 1 starts the processing illustrated in FIG. 5. First, in step S301, the system feature checking unit 104 checks the conformity of the system feature group that has been input. For example, when the system feature group that has been input includes "system feature A" and "system feature C" and the system feature constraining information 110 is as illustrated in FIG. 2, the following check is performed. First, with the "system feature A" as the processing-target system feature, whether the system feature group that has been input includes either of the "system feature B" and the "system feature C" is checked. Then, with the "system feature C" as the processing-target system feature, whether the "system feature B" is not included in the system feature group is checked.

Subsequently in step S302, the system feature checking unit 104 determines the checked result of step S301. When the checked result is OK, that is, when it is determined that all the system features included in the system feature group have conformity, the system feature checking unit 104 outputs the system feature group, which has been input, to the system component selecting unit 105 and the feature conversion unit 111, and the process proceeds to step S303. When the checked result is NG, that is, when it is determined that there is a system feature lacking conformity, the system feature checking unit 104 ends the processing illustrated in FIG. 5.

In step S303, the system component selecting unit 105 specifies the system component corresponding to the system feature group that the system feature checking unit 104 outputs, and outputs the system component as the system component selection result 102. Subsequently in step S304, the feature conversion unit 111 specifies the software feature group corresponding to the system feature group that the system feature checking unit 104 outputs, and outputs the software feature group to the software feature checking unit 109. Note that, step S303 and step S304 may be executed in reverse order, or may be executed substantially together.

Subsequently in step S305, the software feature checking unit 109 checks the conformity of the software feature group that has been output by the feature conversion unit 111. Subsequently in step S306, the software feature checking unit 109 determines the checked result of step S305. When the checked result is OK, that is, when it is determined that all the software features included in the software feature group have conformity, the software feature checking unit 109 outputs the software feature group, which has been input, to the software component selecting unit 106, and the process proceeds to step S307. When the checked result is NG, that is, when it is determined that there is a software feature lacking conformity, the software feature checking unit 109 ends the processing illustrated in FIG. 5. In step S307, the software component selecting unit 106 specifies the software component corresponding to the software feature group that the software feature checking unit 109 outputs, outputs the software component as the software component selection result 103, and ends the processing illustrated in FIG. 5.

When a negative determination is made in step S302 or in step S306, a notification may be given using the notification unit instead of just ending the process. This notification by the notification unit includes information explaining the lack of conformity, for example, a character string or a voice telling "System feature B and system feature C are both selected."

According to the first embodiment described above, the following effects can be obtained.
(1) The processing device 1 includes the storage unit 44 that stores the software component DB 107 that is a database indicating the correspondence relationship between a software component including at least a source code and a software feature indicating characteristics of a software, and heterogeneous features correlation information 112 indicating the correspondence relationship between the software feature and a system feature having a lower abstraction level than the software feature and indicating characteristics of a system, the input unit 45 that receives the request feature list 101 including one or more of the system features, the feature conversion unit 111 that refers to the heterogeneous features correlation information and outputs the software feature corresponding to the system feature included in the request feature list 101, and the software component selecting unit 106 that refers to the software component DB 107 and outputs as the software component selection result 103 the software component corresponding to the software feature output by the feature conversion unit 111. Thus, by using the processing device 1, the software component selection result 103, which represents a specific software component, can be obtained based on the request feature list 101, which is a group of system features having high abstraction level.
(2) The storage unit 44 stores the system feature constraining information 110 indicating constraints among system features. The processing device 1 includes the notification unit 46 that notifies a user of information, and the system feature checking unit 104 that, when the number of the system features included in the request feature list 101 is two or more and the system features included in the request feature list 101 do not satisfy the constraining condition between the system features based on the system feature constraining information 110, uses the notification unit 46 to notify the user that the system features do not satisfy the constraining condition between the system features. Thus, the processing device 1 can notify the user of a problem in the set of system features that has been input.
(3) The storage unit 44 stores the software feature constraining information 113 indicating constraints among software features. The processing device 1 includes the notification unit 46 that notifies a user of information, and the software feature checking unit 109 that, when the number of the software features that the feature conversion unit 111 outputs is two or more and the software features that are output by the feature conversion unit 111 do not satisfy a constraining condition between the software features based on the software feature constraining information 113, uses the notification unit 46 to notify the user that the software features do not satisfy the constraining condition between the software features. Thus, the processing device 1 can notify the user of a problem in the set of software features that has been input.
(4) The storage unit 44 stores the system component database 108 which is a database indicating a correspondence relationship between a system feature and a system component which is at least either a model or a design document. The processing device 1 includes the system component selecting unit 105 that specifies the system component corresponding to the system feature included in the request feature list 101 based on the system component database 108, and outputs the system component as the system component selection result 102. Thus, the processing device 1 can present the correspondence between the system component and the software component to the user.

### (First exemplary modification of first embodiment)

The processing device 1 may not include at least one of the system feature checking unit 104, the system feature constraining information 110, the system component selecting unit 105, the system component DB 108, the software feature checking unit 109, and the software feature constraining information 113. That is, the processing device 1 is to include the input unit 45 that receives the request feature list 101, the feature conversion unit 111, the software component selecting unit 106, and the storage unit 44 that stores the software component DB 107 and the heterogeneous features correlation information 112.

For example, when the processing device 1 does not include the system feature checking unit 104, the feature conversion unit 111 and the system component selecting unit 105 may simply assume the system feature group included in the request feature list 101 as a processing-target. When the processing device 1 does not include the software feature checking unit 109, the software component selecting unit 106 may simply process the output of the feature conversion unit 111.

### (Second exemplary modification of first embodiment)

At least one of the software component DB 107, the system component DB 108, the system feature constraining information 110, the heterogeneous features correlation information 112, and the software feature constraining information 113 that are stored in the storage unit 44 of the first embodiment may not be stored in the storage unit 44. In this case, the processing device 1 may obtain these pieces of information from the external of the processing device 1 using a communication device (not illustrated). For example, the processing device 1 may obtain the entire information from the external as necessary, obtain selected pieces of information from the external, or obtain a result of processing.

For example, when the processing device 1 does not include the system feature constraining information 110 and the request feature list 101 includes "system feature A" and "system feature B", any one of the following three processing examples may be performed. In a first processing example, the entire system feature constraining information 110 is obtained from the external and processed in the same manner as in the first embodiment. In a second processing example, only the information related to "system feature A" and "system feature B" in the system feature constraining information 110 is obtained from the external and processed in the same manner as in the first embodiment. In a third processing example, "system feature A" and "system feature B" which are system feature names are output to the external, and a calculation result as to whether there is excess or deficiency is obtained.

### -Second embodiment-

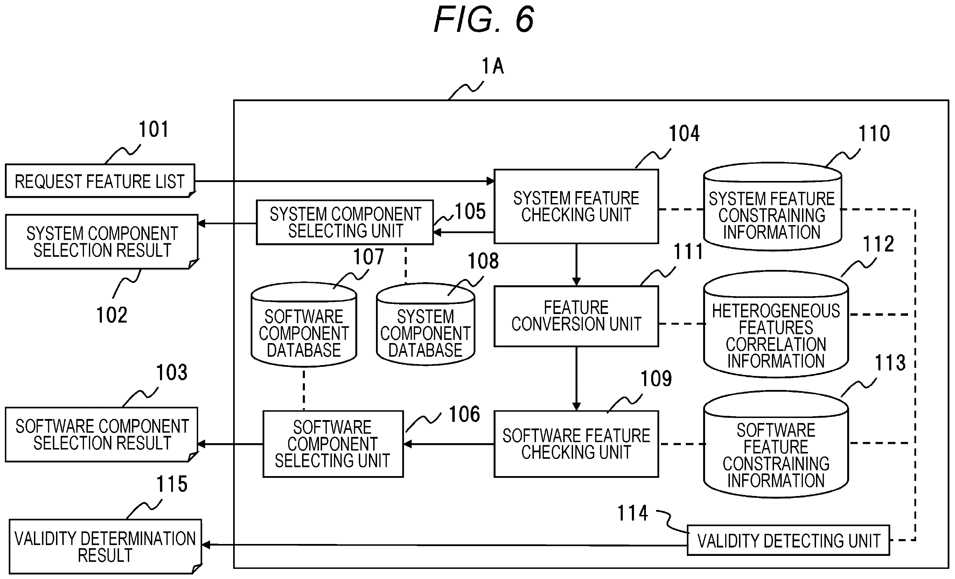

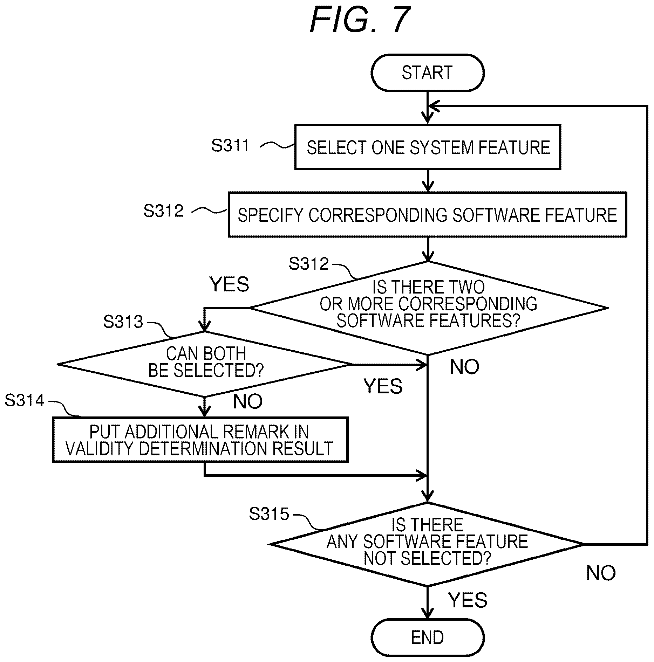

A second embodiment of the processing device according to the present invention will be described with reference to FIGS. 6 and 7 . In the following description, the same component as that of the first embodiment is denoted by the same reference sign, and differences will be mainly described. Points not specifically described are the same as those of the first embodiment. The present embodiment is different from the first embodiment mainly in that the information used for processing is checked.

FIG. 6 is a functional configuration diagram of a processing device 1A according to the second embodiment. In addition to the configuration of the processing device 1 of the first embodiment, the processing device 1A further includes a validity detecting unit 114. The validity detecting unit 114 checks validity of the conformity with the system feature constraining information 110, the heterogeneous features correlation information 112, and the software feature constraining information 113, and outputs a validity determination result 115. The validity detecting unit 114 is implemented by, for example, the CPU 41 loading a program stored in the ROM 42 into the RAM 43 and executing the program.

The validity detecting unit 114 may operate when the processing device 1 is booted, or operate each time any one of the system feature constraining information 110, the heterogeneous features correlation information 112, and the software feature constraining information 113 is input or edited. Note that input and editing of the system feature constraining information 110, the heterogeneous features correlation information 112, and the software feature constraining information 113 are performed by the user using the input unit 45.

The system feature constraining information 110, the heterogeneous features correlation information 112, and the software feature constraining information 113 are more prone to errors for a larger number of features. For example, when the system feature constraining information 110, the heterogeneous features correlation information 112, and the software feature constraining information 113 are created by a person, an error is more likely to occur by an input error or an oversight for a larger number of features . When the system feature constraining information 110, the heterogeneous features correlation information 112, and the software feature constraining information 113 are created using a computer program, the program to be created becomes more complex for a larger number of features and is therefore likely to include a bug. To address this problem, the validity detecting unit 114 determines the validity among the system feature constraining information 110, the heterogeneous features correlation information 112, and the software feature constraining information 113. The validity detecting unit 114 can detect a problem but cannot specify how to correct the problem.

An example of validity detection processing performed by the validity detecting unit 114 will be described. For example, the validity detecting unit 114 replaces each system feature that is a header of a row or a column in the system feature constraining information 110 with a software feature based on the heterogeneous features correlation information 112. Next, after the replacement is done, the validity detecting unit 114 sorts the order of the software features in the system feature constraining information 110 in lexicographic order, and extracts the difference from the software feature constraining information 113 to generate the validity determination result 115.

FIG. 7 illustrates another example of validity detection processing performed by the validity detecting unit 114. First, in step S311, the validity detecting unit 114 selects one system feature that is written in the system feature constraining information 110 but is not yet selected. When describing FIG. 7, the system feature selected in this step is referred to as "processing-target system feature". Subsequently in step S312, the validity detecting unit 114 refers to the heterogeneous features correlation information 112 to specify the software feature corresponding to the processing-target system feature. Subsequently in step S312, the validity detecting unit 114 determines whether the number of software features specified in step SS312 is two or more. If it is determined that the number is two or more, the process proceeds to step S313. If it is determined that the number is one, the process proceeds to step S315.

In step S313, the validity detecting unit 114 determines, with reference to the software feature constraining information 113, whether a plurality of software features specified in step S312 can be selected together. When determining that the software features can be selected together, that is, determining that the relationship between the specified software features is not a "NOT" relationship in the software feature constraining information 113, the validity detecting unit 114 proceeds the process to step S315, and when determining that the software features cannot be selected together, the validity detecting unit proceeds the process to step S314. In step S314, the validity detecting unit 114 puts an additional remark in the validity determination result 115 that there is a contradiction between the processing-target system feature and the software specified in step S312, and proceeds the process to step S315.

In step S315, the validity detecting unit 114 determines whether there is any software feature not selected. Specifically, the validity detecting unit 114 ends the processing illustrated in FIG. 7 when determining that all the system features written in the system feature constraining information 110 have been selected in step S311, and returns the process to step S311 when determining that there is a system feature not yet selected among the system features written in the system feature constraining information 110. These are description of FIG. 7.

According to the second embodiment described above, the following effect can be obtained.

(5) The storage unit 44 stores the system feature constraining information 110 indicating constraints among system features and software feature constraining information 113 indicating constraints among software features. The processing device 1A includes the validity detecting unit 114 that detects a contradiction among the heterogeneous features correlation information 112, the system feature constraining information 110, and the software feature constraining information 113. Thus, the processing device 1A can detect a contradiction among the heterogeneous features correlation information 112, the system feature constraining information 110, and the software feature constraining information 113 that are previously created by the user.

### -Third embodiment-

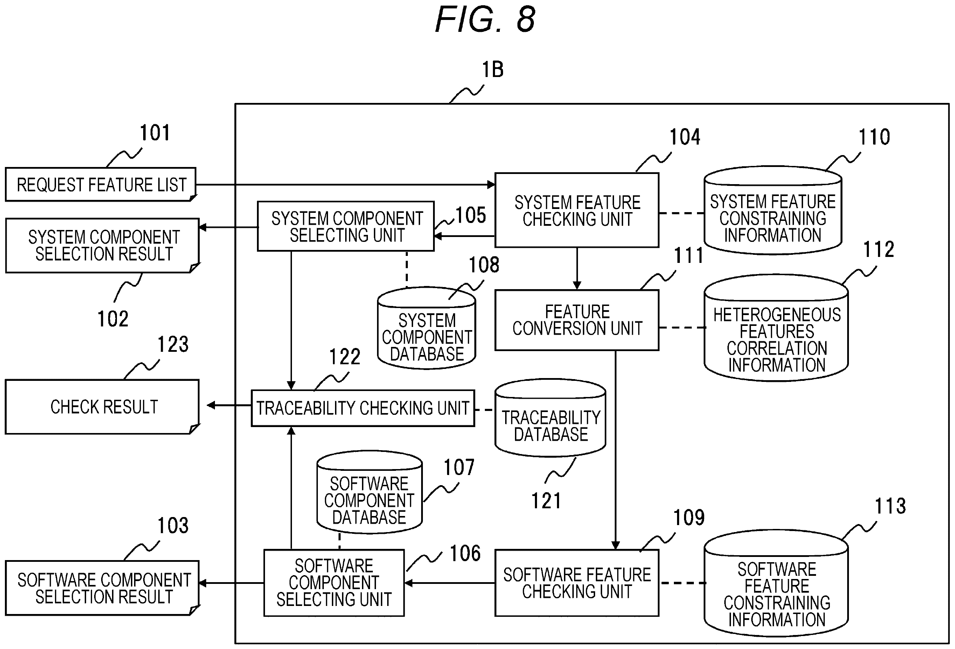

A third embodiment of the processing device according to the present invention will be described with reference to FIGS. 8. In the following description, the same component as that of the first embodiment is denoted by the same reference sign, and differences will be mainly described. Points not specifically described are the same as those of the first embodiment. The present embodiment is different from the first embodiment mainly in that the correlation between a system component and a software component that are output by the processing device is checked.

FIG. 8 is a functional configuration diagram of a processing device 1B according to a third embodiment. In addition to the configuration of the processing device 1 of the first embodiment, the processing device 1B further includes a traceability checking unit 122 and a traceability database (hereinafter referred to as "traceability DB") 121. In the present embodiment, the system component selecting unit 105 outputs the system component selection result 102 also to the traceability checking unit 122, and the software component selecting unit 106 outputs the software component selection result 103 also to the traceability checking unit 122.

The traceability checking unit 122 is implemented by, for example, the CPU 41 loading a program stored in the ROM 42 into the RAM 43 and executing the program. The traceability DB 121 is previously stored in the storage unit 44. The traceability DB 121 is a database that stores the correspondence relationship between a system component and a software component as traceability information of design. Note that, since the heterogeneous features correlation information 112 described in the first embodiment indicates the correspondence relationship between system features and software features, the heterogeneous features correlation information 112 and the traceability DB 121 are similar in nature but have different informational abstraction levels.

The traceability checking unit 122 checks the conformity between the system component selection result 102 output by the system component selecting unit 105 and the software component selection result 103 output by the software component selecting unit 106 with reference to the traceability DB 121. In other words, the traceability checking unit 122 refers to the traceability DB 121 to extract a software component corresponding to the system component selection result 102 output by the system component selecting unit 105, and determines whether the extracted software component matches the software component output by the software component selecting unit 106. The traceability checking unit 122 outputs as a check result 123 whether the two match. Note that if the two do not match, it means that there is an error in any of the heterogeneous features correlation information 112, the software component DB 107, the system component DB 108, and the traceability DB 121.

According to the third embodiment described above, the following effect can be obtained.

(6) The storage unit 44 stores the traceability database 121 indicating the correspondence relationship between system components and software components. The processing device 1B includes the traceability checking unit 122 that refers the traceability database 121, specifies the software component corresponding to the system component specified by the system component selecting unit 105, and checks whether the specified software component matches the software component selected by the software component selecting unit 106. Thus, the processing device 1B can detect an error, if any, in any of the heterogeneous features correlation information 112, the software component DB 107, the system component DB 108, and the traceability DB 121 that are previously created.

### -Fourth embodiment-

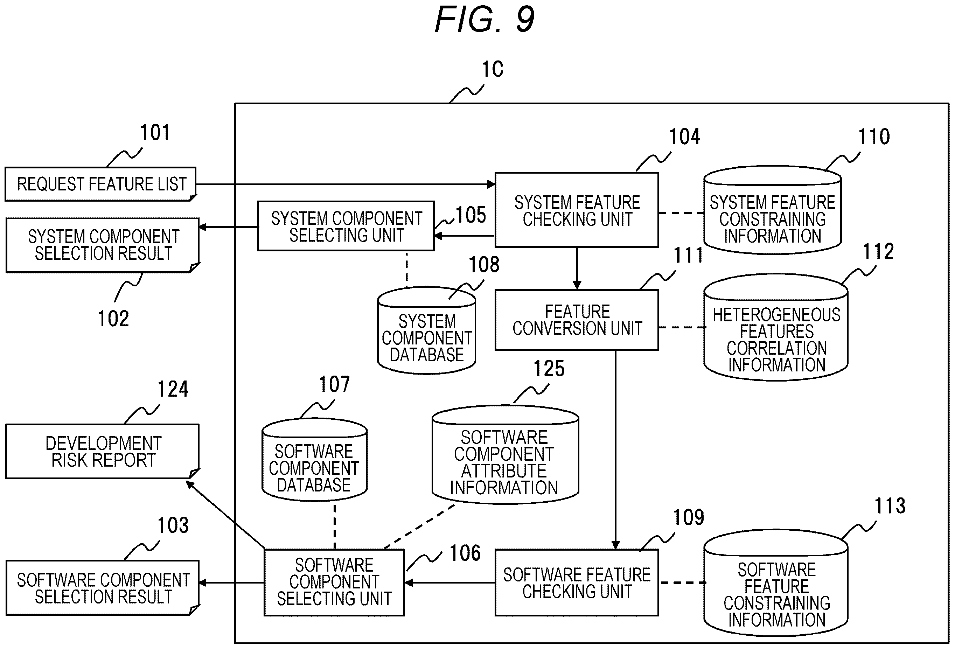

A fourth embodiment of the processing device according to the present invention will be described with reference to FIGS. 9. In the following description, the same component as that of the first embodiment is denoted by the same reference sign, and differences will be mainly described. Points not specifically described are the same as those of the first embodiment. The present embodiment is different from the first embodiment mainly in that the attribute information of a software component is also output.

FIG. 8 is a functional configuration diagram of a processing device 1C according to the fourth embodiment. In addition to the configuration of the processing device 1 of the first embodiment, the processing device 1C further includes software component attribute information 125, and additionally performs processing by the software component selecting unit 106 as described later. The software component attribute information 125 includes the attribute information of each software component, and includes, for example, at least one of software component size, index indicating feature abstraction level, development difficulty level, and the number of test re-execution. The software component size may be the file size of a source code or the file size of an intermediate file obtained by compiling a source code.

The software component selecting unit 106 in the present embodiment performs the following processing in addition to the processing performed in the first embodiment. That is, the software component selecting unit 106 obtains from the software component attribute information 125 the attribute information of the software component specified with reference to the software component DB 107, and outputs the obtained attribute information as a development risk report 124.

According to the fourth embodiment described above, the following effect can be obtained.

(7) The storage unit 44 stores the software component attribute information 125 indicating the correspondence relationship between a software component and software component attribute information which is the attribute information of the software component. The software component selecting unit 106 outputs as the development risk report the software component attribute information corresponding to the software component to be output. The attribute information is at least one of software component size, index indicating feature abstraction level, development difficulty level, and the number of test re-execution. Thus, since the processing device 1C outputs also the attribute information of the software component, the user can not only receive the software component as a target to be developed but also obtain the attribute information of the software component to utilize the attribute information as reference information for making a future development plan.

In the above-described embodiments and the exemplary modifications, the functional block configurations are merely examples. Some functional configurations illustrated as separate functional blocks may be integrated, or a configuration illustrated in one functional block diagram may be divided into two or more functions. In addition, a part of the function of a functional block may be included in another functional block.

In the above-described embodiments and the exemplary modifications, the program is stored in the ROM 42, but the program may be stored in the storage unit 44. In addition, the processing device 1 may include an input-output interface (not illustrated), and a program may be read from another device via a usable medium that can be used by the input-output interface and the processing device 1 as necessary. The medium here is, for example, a storage medium detachable from the input-output interface, or a communication medium, that is, a wired, wireless, or optical network, or a carrier wave or a digital signal propagating through the network. Some or all of the functions implemented by a program may be implemented by a hardware circuit or an FPGA.

The above-described embodiments and the exemplary modifications may be combined. Although various embodiments and exemplary modifications have been described above, the present invention is not limited to the contents thereof. Other aspects conceivable within the scope of the technical idea of the present invention are also included within the scope of the present invention.

### Reference Signs List

1A, 1B, 1C processing device
44 storage unit
45 input unit
46 notification unit
104 system feature checking unit
105 system component selecting unit
106 software component selecting unit
107 software component database
108 system component database
109 software feature checking unit
110 system feature constraining information
111 feature conversion unit
112 heterogeneous features correlation information
113 software feature constraining information
114 validity detecting unit
121 traceability database
122 traceability checking unit
125 software component attribute information
1122 heterogeneous features correlation information

## Claims

1. A processing device comprising:
a storage unit that stores a software component database that is a database indicating a correspondence relationship between a software component including at least a source code and a software feature indicating characteristics of a software, and heterogeneous features correlation information indicating a correspondence relationship between the software feature and a system feature having a lower abstraction level than the software feature and indicating characteristics of a system;
an input unit that receives a request feature list including one or more of the system features;
a feature conversion unit that refers to the heterogeneous features correlation information and outputs the software feature corresponding to the system feature included in the request feature list; and
a software component selecting unit that refers to the software component database and outputs as a software component selection result the software component corresponding to the software feature output by the feature conversion unit.

2. The processing device according to claim 1, wherein
the storage unit further stores system feature constraining information indicating a constraint between the system features, and
the processing device further includes a notification unit that notifies a user of information, and
a system feature checking unit that, when a number of the system features included in the request feature list is two or more and the system features included in the request feature list do not satisfy a constraining condition between the system features based on the system feature constraining information, uses the notification unit to notify the user that the system features do not satisfy the constraining condition between the system features.

3. The processing device according to claim 1, wherein
the storage unit further stores software feature constraining information indicating a constraint between the software features, and
the processing device further includes a notification unit that notifies a user of information, and
a software feature checking unit that, when a number of the software features that the feature conversion unit outputs is two or more and the software features that are output by the feature conversion unit do not satisfy a constraining condition between the software features based on the software feature constraining information, uses the notification unit to notify the user that the software features do not satisfy the constraining condition between the software features.

4. The processing device according to claim 1, wherein
the storage unit further stores a system component database that is a database indicating a correspondence relationship between the system feature and a system component that is at least one of a model and a design document, and
the processing device further includes a system component selecting unit that specifies the system component corresponding to the system feature included in the request feature list based on the system component database and outputs the system component as a system component selection result.

5. The processing device according to claim 1, wherein
the storage unit further stores system feature constraining information indicating a constraint between the system features and a software feature constraining information indicating a constraint between the software features, and
the processing device further includes a validity detecting unit that detects a contradiction among the heterogeneous features correlation information, the system feature constraining information, and the software feature constraining information.

6. The processing device according to claim 4, wherein
the storage unit further stores a traceability database indicating a correspondence relationship between the system component and the software component, and
the processing device further includes a traceability checking unit that refers to the traceability database, specifies the software component corresponding to the system component specified by the system component selecting unit, and checks whether the software component that has been specified matches the software component selected by the software component selecting unit.

7. The processing device according to claim 1, wherein
the storage unit further stores software component attribute information indicating a correspondence relationship between the software component and software component attribute information that is attribute information of the software component,
the software component selecting unit further outputs the software component attribute information corresponding to the software component to be output as a development risk report, and
the attribute information is at least one of a size of the software component, an index indicating an abstraction level of a feature, a development difficulty level, and a number of test re-execution.

8. A method for selecting a software component, the method being executed by a processing device including a storage unit that stores a software component database that is a database indicating a correspondence relationship between a software component including at least a source code and a software feature indicating characteristics of a software, and heterogeneous features correlation information indicating a correspondence relationship between the software feature and a system feature having a lower abstraction level than the software feature and indicating characteristics of a system, and an input unit that receives a request feature list including one or more of the system features, the method comprising:
feature conversion processing of referring to the heterogeneous features correlation information and outputting the software feature corresponding to the system feature included in the request feature list, and
software component selecting processing of referring to the software component database and outputting as a software component selection result the software component corresponding to the software feature output by the feature conversion processing.
